**Europäisches Patentamt**

**European Patent Office**

**Office européen des brevets**

(11) Veröffentlichungsnummer: **0 440 038 A1**

# (12) EUROPÄISCHE PATENTANMELDUNG

(21) Anmeldenummer: **91100445.5**

(22) Anmeldetag: **16.01.91**

(51) Int. Cl.5: **F16N 7/32**

(30) Priorität: **01.02.90 DE 4002846**

(43) Veröffentlichungstag der Anmeldung:
**07.08.91 Patentblatt 91/32**

(84) Benannte Vertragsstaaten:
**CH DE ES FR IT LI**

(71) Anmelder: **DE LIMON FLUHME GMBH**
**Arminstrasse 15**
**W-4000 Düsseldorf(DE)**

(72) Erfinder: **Saretzky, Horst**
**Gartenstrasse 11**
**W-5828 Ennepetal 13(DE)**
Erfinder: **Herwig, Helmut**
**Brombergerstrasse 15**
**W-4048 Grevenbroich 5(DE)**

(74) Vertreter: **Patentanwälte Dipl.-Ing. Alex**
**Stenger Dipl.-Ing. Wolfram Watzke Dipl.-Ing.**
**Heinz J. Ring**
**Kaiser-Friedrich-Ring 70**
**W-4000 Düsseldorf 11(DE)**

(54) **Verfahren und Vorrichtung zum Schmieren von Schmierstellen mit Schmierstoffminimalmengen.**

(57) Ein Verfahren zum Schmieren von Schmierstellen mit Schmierstoff-Minimalmengen sieht vor, daß der Schmierstoff einem Druckluftstrom zugeführt und mittels diesem in Tröpfchen, insbesondere in Makrotropfen vorzugsweise mit einer Tropfengröße im Bereich >10 $\mu$m zerstäubt wird und daß anschließend die Tröpfchen mit dem Druckluftstrom zur Schmierstelle transportiert werden.

Fig. 1

EP 0 440 038 A1

# VERFAHREN UND VORRICHTUNG ZUM SCHMIEREN VON SCHMIERSTELLEN MIT SCHMIERSTOFF-MINIMALMENGEN

Die Erfindung betrifft ein Verfahren zum Schmieren von Schmierstellen mit Schmierstoff-Minimalmengen; die Erfindung betrifft ferner eine Vorrichtung zur Durchführung des Verfahrens.

Aufgrund der allgemeinen Forderung nach Umweltschutz werden auch im Bereich der Metallverarbeitung zur Schmierung von Zerspanungswerkzeugen, insbesondere von Bohrern heutzutage umfangreiche Vorschriften erlassen und Forderungen gestellt. Das Grundprinzip besteht dabei darin, mit Minimalmengen an Schmierstoff ausreichend zu schmieren und dabei die Umwelt nicht zu belasten. Dabei ist auch in vielen Fällen ein entsprechender Kühleffekt mit zu berücksichtigen. Als Schmierstoffe kommen Öl oder abgestimmte Emulsionen, beispielsweise Bohremulsionen auf Öl-Wasser-Basis oder andere Sondermischungen zur Anwendung. Praxisgerechte Verfahren und Vorrichtungen zum Schmieren von Schmierstellen mit Schmierstoff-Minimalmengen sind bislang gescheitert.

Davon ausgehend liegt der Erfindung die **Aufgabe** zugrunde, ein Verfahren sowie eine Vorrichtung zum Schmieren von Schmierstellen mit Schmierstoff-Minimalmengen zu schaffen.

Als technische **Lösung** wird mit der Erfindung verfahrensmäßig vorgeschlagen, daß der Schmierstoff einem Druckluftstrom zugeführt und mittels diesem in Tröpfchen, insbesondere in Makrotropfen vorzugsweise mit einer Tropfengröße im Bereich >10 $\mu$m zerstäubt wird und daß anschließend die Tröpfchen mit dem Druckluftstrom zur Schmierstelle transportiert werden.

Auf diese Weise ist ein optimal arbeitendes Verfahren für eine kontinuierliche Schmierung mit Schmierstoff-Minimalmengen auf der Basis einer Öl-Luft-Schmierung geschaffen. Ohne die Umwelt mit überschüssigen Schmierstoffmengen zu belasten, werden mittels des Druckluftstromes Makrotropfen der Schmierstelle zugeführt. Anders als beim Mikronebel stellen die mittels des erfindungsgemäßen Verfahrens erzeugten Schmierstoff-Tröpfchen keine Umweltbelastung dar. Ein besonderer Vorteil des erfindungsgemäßen Verfahrens liegt darin, daß eine sofortige Schmierung beim Einsetzen der Druckluft an der Bedarfsstelle möglich ist, so daß keine Bedarfslücke zwischen der Inbetriebsetzung der Maschine und dem Beginn des Schmiervorganges entsteht.

In einer Weiterbildung des erfindungsgemäßen Verfahrens wird der Schmierstoff vorzugsweise eingespritzt, so daß aufgrund der hohen kinetischen Energie des Schmierstoffes die Tröpfchenbildung erleichtert und somit der Wirkungsgrad des Schmierverfahrens verbessert wird.

In einer bevorzugten Weiterbildung wird der Schmierstoff intermittierend dem Druckluftstrom zugeführt. Vorzugsweise wird dabei der Schmierstoff in Tropfenform dem Druckluftstrom zugeführt, wobei ein derartiger Tropfen beispielsweise ein Volumen von 10 mm³ je nach Bedarfszweck haben kann. Durch die Zuführung des Schmierstoffes in Tropfenform lassen sich sehr kleine Mengen dosieren, wobei der Sättigungsgrad der abströmenden Druckluft zum Verbraucher von der Einspritzmenge, also von der Tröpfchengröße, sowie von dem beliebig einstellbaren Intervall der zuzuführenden Tropfen abhängt, wobei dieses Intervall beispielsweise 8 sec betragen kann.

Der Druckluftstrom des erfindungsgemäßen Verfahrens kann entweder kontinuierlich oder intermittierend sein, wobei dies je nach Bedarfsfall abhängt.

In einer Weiterbildung wird vorgeschlagen, daß zum Zerstäuben des Schmierstoffes dieser durch den Druckluftstrom mitgerissen wird. Dabei wird der zugeführte Schmierstoff vorzugsweise zunächst als Film auf eine große Oberfläche verteilt und anschließend zum Zerstäuben durch den darüberströmenden Druckluftstrom mitgerissen. Dies liefert eine technisch sehr einfache Möglichkeit, um eine bestimmte, beispielsweise in Tropfenform zugeführte Menge eines Schmierstoffes zu zerstäuben und in Makrotropfen überzuführen.

Als technische **Lösung** wird zur Durchführung des erfindungsgemäßen Verfahrens vorrichtungsmäßig eine Schmierstoffzuführung, eine Druckluftzuführung, eine Zerstäubungseinrichtung zum Zerstäuben des zugeführten Schmierstoffes in Tröpfchen, insbesondere in Makrotropfen vorzugsweise mit einer Tropfengröße im Bereich >10 $\mu$m mittels der zugeführten Druckluft sowie eine der Zerstäubungseinrichtung nachgeordnete Abführung für die Druckluft mit den darin enthaltenen, zerstäubten Tröpfchen bis zur Schmierstelle vorgeschlagen. Eine derartige Vorrichtung zum Zerstäuben des Schmierstoffes läßt sich technisch sehr einfach realisieren.

Vorzugsweise ist dabei die Schmierstoffzuführung eine Einspritzeinrichtung. Mittels dieser Einspritzeinrichtung wird mit hoher Energie beispielsweise ein Tropfen des Schmierstoffes auf die Zerstäubungseinrichtung gesprüht, so daß hierdurch ein intensivierter Zerstäubungseffekt bereits erzielt wird.

In einer bevorzugten konstruktiven Ausbildung sind die Schmierstoffzuführung und die Druckluftzuführung durch in eine gemeinsame Kammer eines Mischgehäuses mündende Leitungen gebildet, wobei dieser Kammer die Zerstäubungseinrichtung nachgeordnet ist. In dieser Kammer des Mischgehäuses wird somit die Druckluft und der zugeführte, insbesondere eingespritzte Schmierstoff zusammengeführt.

Um einen optimalen Zerstäubungseffekt ohne Verluste beispielsweise durch seitliches Ausbrechen von größeren Schmierstoffteilchen zu verhindern, mündet die Leitung für die Schmierstoffzuführung vorzugsweise unmittelbar vor der Zerstäubungseinrichtung.

Damit der Zerstäubungseffekt voll zum Tragen kommt, ist der Gesamtauslaßquerschnitt der Zerstäubungseinrichtung vorzugsweise kleiner als der Einlaßquerschnitt der Druckluftzuführung, so daß auf diese Weise ein Staudruck erzeugt wird.

Zur Schaffung einer konstruktiv einfachen Schmiervorrichtung wird vorgeschlagen, daß die Zerstäubungseinrichtung als separates Bauteil in die Kammer des Mischgehäuses eingesetzt ist. Ein derartiges Einsatzstück kann dabei im Preßsitz in das Mischgehäuse eingesetzt sein, so daß ohne große zusätzliche Fixierungsmittel ein sicherer Halt der Zerstäubungseinrichtung innerhalb des Mischgehäuses gewährleistet ist.

In einer bevorzugten Weiterbildung weist die Zerstäubungseinrichtung Teilchen oder dgl. mit einer großen Oberfläche auf, auf der sich der Schmierstoff als Film verteilt und wobei die Druckluft über diese Oberfläche führbar ist. Eine relativ kleine Menge an Schmierstoff benetzt somit eine große Oberfläche, von der dann der Druckluftstrom die Makrotropfen mit sich mitreißt.

In einer bevorzugten konstruktiven Ausgestaltung dieses Prinzips weist die Zerstäubungseinrichtung vorzugsweise ein Zerstäubergehäuse mit einer vorderen Zerstäuberaustrittsdüse auf, in dem eine Vielzahl von vorzugsweise gegeneinander beweglichen Kugeln angeordnet sind. Diese Kugeln können beispielsweise aus Metall oder Kunststoff bestehen und können beispielsweise einen Durchmesser von 1 mm aufweisen. Der auf die Kugelpackung aufgegebene, insbesondere eingespritzte Schmierstoff verteilt sich auf der großen Kugeloberfläche, wobei der durch die Kugelpackung strömende Luftstrom die Makrotropfen mitreißt und diese im austretenden Luftstrom kontinuierlich der Schmierstelle zugeführt werden. Bei einer intermittierenden Aufgabe des Schmierstoffes bewirkt dabei die Kugelpackung eine seitliche Vergleichmäßigung der Makrotropfenabgabe, da der seitlich punktuell aufgegebene Schmierstofftropfen allmählich in Strömungsrichtung durch die Kugelpackung hindurchwandert und dabei die gesamte Oberfläche der Kugeln benetzt, was eine gewisse Zeit in Anspruch nimmt.

Vorzugsweise weist dabei das Zuführungsgehäuse im Bereich der Mündung der Schmierstoffzuführung eine Vorkammer auf. Diese verhindert ein seitliches Ausbrechen von eventuellen größeren Ölteilchen, so daß die gesamte Schmierstoffmenge der Zerstäubungseinrichtung und damit der zu schmierenden Schmierstelle zugeführt wird, ohne daß vorher Schmierstoff verlorengeht und sich vor der Zerstäubungseinrichtung ansammelt.

In einer Weiterbildung des Zerstäubergehäuses weist dieses zusätzliche Durchgangsbohrungen für die Druckluft auf, wobei diese Durchgangsbohrungen vorzugsweise an der Zerstäuberaustrittsdüse vorbeigeführt sind. Die Durchgangsbohrungen wirken dabei gewissermaßen als Bypass und bewirken, daß sich im eigentlichen Bereich der Zerstäubung, nämlich im Bereich vor der Kugelpackung ein Staudruck ausbildet, der für das Zerstäuben in die Makrotropfen notwendig ist. Durch das Vorbeiführen der Durchgangsbohrungen an der Zerstäuberaustrittsdüse entsteht durch die vorbeiströmende Druckluft an der Düsenspitze eine Venturiewirkung mit einem entsprechenden Sogeffekt. Es resultiert daraus ein weiterer Zerreißungsvorgang des Schmierstoffes mit einer kontinuierlichen Zuführung von Tröpfchen in Makrogröße zur Schmierstelle.

Schließlich wird in einer Weiterbildung vorgeschlagen, daß der Übergang von der Zerstäubungseinrichtung zur Abführung glattwandig erfolgt. Dadurch ist ein glattes Ausströmen der gebildeten Makrotropfen gewährleistet, ohne daß sich Turbulenzen bilden und Restmengen an Schmierstoff sammeln können.

Ein bevorzugtes Anwendungsgebiet des beschriebenen Verfahrens und der beschriebenen Vorrichtung zur Schmierung von Schmierstellen mit Schmierstoff-Minimalmengen sind die Zerspanungswerkzeuge, insbesondere die Bohrer zum Fertigen von Bohrungen, insbesondere Tiefbohrungen.

Ein Ausführungsbeispiel einer erfindungsgemäßen Vorrichtung zum Schmieren von Schmierstellen mit Schmierstoff-Minimalmengen wird nachfolgend anhand der Zeichnung beschrieben. In dieser zeigt:

Fig. 1 eine schematische Darstellung einer verfahrbaren Tiefloch-Bohreinheit unter Verwendung der erfindungsgemäßen Schmiervorrichtung;

Fig. 2 die Schmiervorrichtung in Fig. 1 in einer vergrößerten Darstellung;

Fig. 3 einen Schnitt durch ein Zerstäubergehäuse mit einer darin angeordneten Kugelpackung der Schmiervorrichtung in Fig. 2.

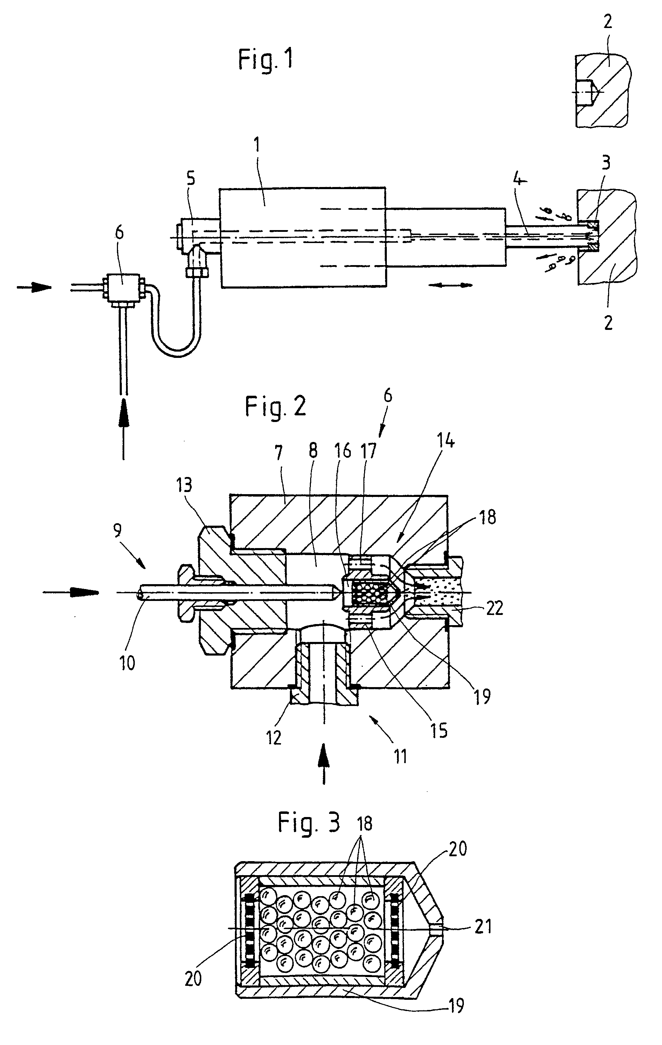

Fig. 1 zeigt schematisch eine verfahrbare Tiefloch-Bohreinheit 1 zum Herstellen von Tieflochbohrungen in einem Werkstück 2. Dieses Werkstück 2 wird zunächst vorgebohrt (in Fig. 1 obere Darstellung des Werkstückes 2), um anschließend mittels der Tiefloch-Bohreinheit 1 die endgültige Tieflochbohrung durchzuführen, wie dies in Fig. 1 unten dargestellt ist. Zu diesem Zweck weist die Tiefloch-Bohreinheit 1 ein Sonderbohrwerkzeug 3 auf, welches einen axialen Luftströmungskanal 4 aufweist, welcher in zwei kleineren Düsenbohrungen am vorderen Ende mündet. Am rückwärtigen Ende weist die Tiefloch-Bohreinheit 1 eine Dreheinführung 5 zum Zuführen eines Schmierstoffes zur Bohrstelle durch den Luftströmungskanal 4 hindurch auf.

Die Dreheinführung 5 der Tiefloch-Bohreinheit 1 ist an eine speziell ausgebildete Schmiervorrichtung 6 angeschlossen, mittels welcher Schmierstoff-Minimalmengen der Schmierstelle am vorderen Ende des Sonderbohrwerkzeugs 3 zugeführt werden können. Diese Schmiervorrichtung 6 ist detaillierter in Fig. 2 dargestellt.

Sie besteht zunächst aus einem Mischgehäuse 7, in dem eine Kammer 8 ausgebildet ist. In dieser mündet eine Schmierstoffzuführung 9, welche als Einspritzeinrichtung als Leitung 10 ausgebildet ist, sowie rechtwinklig hierzu eine Druckluftzuführung 11 ebenfalls in Form einer Leitung 12. Die Leitung 10 der Schmierstoffzuführung 9 ist dabei mittels eines entsprechenden Schraubflansches 13 in das Mischgehäuse 7 eingeschraubt. Am vorderen Ende ist die Leitung 10 in der Art einer Düse ausgebildet. Die Leitung 12 der Druckluftzuführung 11 ist ebenfalls in das Mischgehäuse 7 eingeschraubt und an eine nicht dargestellte Druckluftquelle angeschlossen.

Innerhalb der Kammer 8 des Mischgehäuses 7 ist eine Zerstäubungseinrichtung 14 angeordnet, welche mit ihrem Herzstück in Fig. 3 vergrößert dargestellt ist. So besteht die Zerstäubungseinrichtung 14 zunächst aus einem Zerstäubergehäuse 15, welches im Preßsitz in die Kammer 8 des Mischgehäuses 7 eingesetzt ist. Im Bereich des der Kammer 8 zugewandten hinteren Endes des Zerstäubergehäuses 15 ist eine Vorkammer 16 ausgebildet, in deren Bereich das vordere Ende der Leitung der Schmierstoffzuführung 9 mündet, wie Fig. 2 erkennen läßt. Konzentrisch um die Mittellängsachse des Zerstäubergehäuses 5 herum weist dieses Durchgangsbohrungen 17 auf, welche im vorderen Bereich der Zerstäubungseinrichtung 14 zur Längsmittelachse hin geführt sind. Innerhalb des Zerstäubergehäuses 15 ist eine Kugelpackung in Form einer Vielzahl von gegeneinander beweglichen Kugeln 18 angeordnet. Zu diesem Zweck sind diese Kugeln 18 in einem im wesentlichen zylindrischen Kugelaufnahmegehäuse 19 angeordnet. Dieses ist in Fig. 3 erkennbar. Dabei sind die Kugeln 18 zwischen zwei Siebscheiben 20 innerhalb des Kugelaufnahmegehäuses 19 festgelegt. Die Kugeln 18 können dabei beispielsweise aus Metall oder Kunststoff bestehen. Das vordere Ende des Kugelaufnahmegehäuses 19 verjüngt sich konisch und bildet im vorderen Bereich eine Zerstäuberaustrittsdüse 21, wie insbesondere Fig. 3 erkennen läßt. Im Bereich dieser Zerstäuberaustrittsdüse 21 sind die Durchgangsbohrungen 17 des Zerstäubergehäuses 15 vorbeigeführt.

Schließlich weist die Schmiervorrichtung noch eine eingeschraubte Abführung 22 auf, welche in Fig. 1 die Verbindungsleitung zwischen der Schmiervorrichtung 6 und der Dreheinführung 5 ist. Die Abführung 22 ist dabei im Bereich der Anschlußverschraubung mit einer Senkung von 90° ausgebildet und die Senkung ist im Raumbereich vor der Zerstäuberaustrittsdüse 21 der nach innen gerichteten Durchgangsbohrung 17 angepaßt.

Die Schmiervorrichtung 6 funktioniert wie folgt: Gleichzeitig mit Beginn des Bohrvorganges wird der Kammer 8 des Mischgehäuses 7 über die Leitung 12 Druckluft zugeführt. Da die Summe der Querschnitte der Durchgangsbohrungen 17 sowie der Zerstäuberaustrittsdüse 21 kleiner ist als der Querschnitt der Leitung 12 der Druckluftzuführung 11 entsteht innerhalb der Kammer 8 ein leichter Staudruck, der die Druckluft dazu zwingt, außer durch die Durchgangsbohrungen 17 des Zerstäubergehäuses 15 auch durch die Zerstäuberaustrittsdüse 21 und damit durch die durch die Kugeln 18 gebildete Kugelpackung hindurch zu strömen. Die Zufuhr der Druckluft erfolgt dabei kontinuierlich.

Gleichzeitig mit der Zufuhr von Druckluft wird über die Leitung 10 mit hoher Energie ein Tropfen des Schmierstoffes über die in Fig. 2 und 3 linke Siebscheibe 20 auf die Kugeln 18 gespritzt. Die Vorkammer 16 verhindert dabei ein seitliches Ausbrechen von eventuellen größeren Ölpartikelchen, so daß die ganze aufgespritzte Menge an Schmierstoff über die Kugelpackung getrieben wird. Die Schmierstoffzuführung in Form von Tropfen erfolgt dabei intermittierend, wobei der Intervallabstand beispielsweise 8 sec betragen kann. Die aufgespritzte, relativ kleine Schmierstoffmenge verteilt sich über die Gesamtoberfläche der Kugeln 18 und benetzt diese in der Art eines Films. Da die Druckluft über die Oberfläche der Kugeln 18 streicht, werden kontinuierlich Makrotropfen mit einer Tropfengröße im Bereich >10 $\mu$m mitgerissen und durch die Zerstäuberaustrittsdüse 21 hindurch in der Abführung 22 mittels des Luftstromes abgeführt, um so die im Luftstrom enthaltenen Makrotropfen kontinuierlich der Schmierstelle zuzuführen. Durch die durch die Durchgangsbohrungen 17 hindurchströmende Druckluft entsteht gleichzeitig eine Venturiewirkung, welche den Zerstäubungseffekt unterstützt.

Der Sättigungsgrad der Druckluft mit den darin enthaltenen Makrotropfen kann durch unterschiedliche Intervallabstände des Einspritzmediums sowie durch die Einspritzmenge variabel gestaltet werden. Bei der Tieflochbohrung hat sich beispielsweise ein Intervallabstand von 8 sec und eine Einspritzmenge von jeweils 10 mm³ als guter Gebrauchswert erwiesen. Der Vorteil dieses Schmierverfahrens liegt darin, daß Minimalmengen an Schmierstoff zugeführt werden können, die einerseits die an sie gestellten Aufgaben erfüllen und andererseits jedoch die Bohrspäne nicht benetzen und daher die Umwelt nicht belasten. Die Gestaltung der Zerstäuberaustrittsdüse 21 ist dabei so zu wählen, daß kein Mikronebel entsteht, welcher im nachhinein eine Umweltbelastung darstellen könnte. Im dargestellten Ausführungsbeispiel für die Tieflochbohrung beträgt der Durchmesser der Zerstäuberaustrittsdüse 21 ca. 1,5 mm.

**Bezugszeichenliste**

| | |
|---|---|
| 1 | Tiefloch-Bohreinheit |
| 2 | Werkstück |
| 3 | Sonderbohrwerkzeug |
| 4 | Luftströmungskanal |
| 5 | Dreheinführung |
| 6 | Schmiervorrichtung |
| 7 | Mischgehäuse |
| 8 | Kammer |
| 9 | Schmierstoffzuführung |
| 10 | Leitung |
| 11 | Druckluftzuführung |
| 12 | Leitung |
| 13 | Schraubflansch |
| 14 | Zerstäubungseinrichtung |
| 15 | Zerstäubergehäuse |
| 16 | Vorkammer |
| 17 | Durchgangsbohrung |
| 18 | Kugel |
| 19 | Kugelaufnahmegehäuse |
| 20 | Siebscheibe |
| 21 | Zerstäuberaustrittsdüse |
| 22 | Abführung |

**Patentansprüche**

1. Verfahren zum Schmieren von Schmierstellen mit Schmierstoff-Minimalmengen,
   **dadurch gekennzeichnet,**
   daß der Schmierstoff einem Druckluftstrom zugeführt und mittels diesem in Tröpfchen, insbesondere in Makrotropfen vorzugsweise mit einer Tropfengröße im Bereich >10 μm zerstäubt wird und
   daß die Tröpfchen anschließend mit dem Druckluftstrom zur Schmierstelle transportiert werden.

2. Verfahren nach Anspruch 1, dadurch gekennzeichnet, daß der Schmierstoff eingespritzt wird.

3. Verfahren nach Anspruch 1 oder 2, dadurch gekennzeichnet, daß der Schmierstoff intermittierend dem Druckluftstrom zugeführt wird.

4. Verfahren nach Anspruch 3, dadurch gekennzeichnet, daß der Schmierstoff in Tropfenform dem Druckluftstrom zugeführt wird.

5. Verfahren nach einem der Ansprüche 1 bis 4, dadurch gekennzeichnet, daß der Druckluftstrom kontinuierlich oder intermittierend ist.

6. Verfahren nach einem der Ansprüche 1 bis 5, dadurch gekennzeichnet, daß zum Zerstäuben des Schmierstoffes dieser durch den Druckluftstrom mitgerissen wird.

7. Verfahren nach Anspruch 6, dadurch gekennzeichnet, daß der zugeführte Schmierstoff zunächst als Film auf eine große Oberfläche verteilt und anschließend zum Zerstäuben durch den darüberströmenden Druckluftstrom mitgerissen wird.

8. Vorrichtung zur Durchführung des Verfahrens nach einem der Ansprüche 1 bis 7,
   **gekennzeichnet durch**
   eine Schmierstoffzuführung (9),
   eine Druckluftzuführung (11),
   eine Zerstäubungseinrichtung (14) zum Zerstäuben des zugeführten Schmierstoffes in Tröpfchen, insbesondere in Makrotropfen vorzugsweise mit einer Tropfengröße im Bereich >10 μm mittels der zugeführten Druckluft
   sowie durch eine der Zerstäubungseinrichtung (14) nachgeordneten Abführung (22) für die Druckluft mit den darin enthaltenen, zerstäubten Tröpfchen hin zur Schmierstelle.

9. Vorrichtung nach Anspruch 8, dadurch gekennzeichnet, daß die Schmierstoffzuführung (9) eine Einspritzeinrichtung ist.

10. Vorrichtung nach Anspruch 8 oder 9, dadurch gekennzeichnet, daß die Schmierstoffzuführung (9) und die Druckluftzuführung (11) durch in einer gemeinsamen Kammer (8) eines Mischgehäuses (7) mündende Leitungen (10,12) gebildet sind, wobei dieser Kammer (8) die Zerstäubungseinrichtung (14) nachgeordnet ist.

11. Vorrichtung nach Anspruch 10, dadurch gekennzeichnet, daß die Leitung (10) für die Schmierstoffzuführung (9) unmittelbar vor der Zerstäubungseinrichtung (14) mündet.

12. Vorrichtung nach einem der Ansprüche 8 bis 11, dadurch gekennzeichnet, daß zur Erzeugung eines Staudruckes der Gesamtauslaßquerschnitt der Zerstäubungseinrichtung (14) kleiner ist als der Einlaßquerschnitt der Druckluftzuführung (11).

13. Vorrichtung nach einem der Ansprüche 10 bis 12, dadurch gekennzeichnet, daß die Zerstäubungseinrichtung (14) als separates Bauteil in die Kammer (8) des Mischgehäuses (7) eingesetzt ist.

14. Vorrichtung nach einem der Ansprüche 8 bis 13, dadurch gekennzeichnet, daß die Zerstäubungseinrichtung (14) Teilchen oder dgl. mit einer großen Oberfläche aufweist, auf der sich der Schmierstoff als Film verteilt und wobei der Druckluftstrom über diese Oberfläche führbar ist.

15. Vorrichtung nach Anspruch 14, dadurch gekennzeichnet, daß die Zerstäubungseinrichtung 14 ein Zerstäubergehäuse (15) mit einer vorderen Zerstäuberaustrittsdüse (21) aufweist, in dem eine Vielzahl von vorzugsweise gegeneinander beweglichen Kugeln (18) angeordnet sind.

16. Vorrichtung nach Anspruch 15, dadurch gekennzeichnet, daß das Zerstäubergehäuse (15) im Bereich der Mündung der Schmierstoffzuführung (9) eine Vorkammer (16) aufweist.

17. Vorrichtung nach Anspruch 15 oder 16, dadurch gekennzeichnet, daß das Zerstäubergehäuse (15) zusätzlich Durchgangsbohrungen (17) für die Druckluft aufweist.

18. Vorrichtung nach Anspruch 17, dadurch gekennzeichnet, daß die Durchgangsbohrungen (17) an der Zerstäuberaustrittsdüse (21) vorbeigeführt sind.

19. Vorrichtung nach einem der Ansprüche 8 bis 18, dadurch gekennzeichnet, daß der Übergang von der Zerstäubungseinrichtung (14) zur Abführung (22) glattwandig erfolgt.

20. Anwendung des Verfahrens und der Vorrichtung zur Schmierung von Schmierstellen mit Schmierstoff-Minimalmengen nach einem der Ansprüche 1 bis 19 für Zerspanungswerkzeuge, insbesondere für Bohrer.

Fig. 1

Fig. 2

Fig. 3

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 735 286  (MIKI)<br>* Spalte 3, Zeile 22 - Spalte __41 * * Spalte 5, Zeile 21 - Spalte 6, Zeile 15; Figuren 1, 2a *<br>– – – | 1-6 | F 16<br>N 7/32 |
| X | US-A-3 941 210  (SARETZKY)<br>* Spalte 3, Zeile 26 - Spalte 4, Zeile 61; Figuren *<br>– – – | 1,7 | |
| A | FR-A-1 268 093  (AUTO RESEARCH CORPORATION)<br>* Seite 1, Spalte 2, Zeile 34 - Seite 22, Spalte 2, Zeile 32; Figuren *<br>– – – | 8 | |
| A | GB-A-1 487 613  (C.A NORGREN CO)<br>* Seite 2, Zeile 20 - Seite 3, Zeile 27; Figuren *<br>– – – – – | 7 | |

**RECHERCHIERTE SACHGEBIETE (Int. Cl.5)**

F 16 N

Der vorliegende Recherchenbericht wurde für alle Patentansprüche erstellt

| Recherchenort | Abschlußdatum der Recherche | Prüfer |
|---|---|---|
| Den Haag | 28 März 91 | MOUTON J.M.M.P. |